# EUROPEAN PATENT APPLICATION

(11) **EP 4 512 507 A1**
(43) Date of publication of application: **26.02.2025**
(21) Application number: 24187859.4
(22) Date of filing: 10.07.2024
(51) Int. Cl.: B01D 53/04, B01D 15/18, B01D 53/047

(54) **ADSORPTION TOWER FOR CONTROLLING A FLUID SUPPLY ROUTE TO A PLURALITY OF BEDS AND OPERATING CONTROL METHOD THEREOF**

(30) Priority: 21.07.2023 KR 20230095501
(71) Applicant: SK Innovation Co., Ltd., Seoul 03188 (KR)
(72) Inventor: KIM, Jae Jeong, 34124 Daejeon (KR); PARK, Chan Saem, 34124 Daejeon (KR); BAE, Sun Hyuk, 34124 Daejeon (KR)
(74) Representative: Prüfer & Partner mbB Patentanwälte · Rechtsanwälte

(57) **Abstract**

An adsorption tower for controlling a fluid supply route to a plurality of beds according to the present disclosure is an adsorption tower including the plurality of beds disposed therein, an inlet port connected to one side and an outlet port connected to the other side thereof. The adsorption tower includes: sensor units disposed inside the plurality of beds, respectively; a plurality of connection pipes which connect at least two or more of the inlet port or the outlet port and the plurality of beds; a plurality of valves connected to the plurality of connection pipes; a memory configured to store one or more instructions; and a processor configured to execute the one or more instructions stored in the memory, the processor is configured to: determine a fluid supply order to the plurality of beds according to adsorption values in the plurality of beds measured by the sensor units; and control the fluid supply route by opening and closing the valves according to the determined fluid supply order.

## Description

### BACKGROUND

### 1. Field

The present disclosure relates to an adsorption tower operating control device and a control method thereof, and more particularly, to an adsorption tower for controlling a fluid supply route to a plurality of beds according to adsorption values of each section and an operating control method thereof. It further relates to a method to repeatedly adsorb and desorb a fluid by operating an adsorption tower.

### 2. Description of the Related Art

Ammonia is one of substances that cause bad smells, and may be generated not only in livestock farms but also in composting facilities, factories, sewage treatment plants, and the like, which use chemical fertilizers or chemical fibers.

Conventionally, ammonia is adsorbed and removed by operating the adsorption tower, and when the adsorption is performed over a predetermined level to cause a reduction in the removal efficiency of the adsorption tower, the adsorption tower is controlled to maintain a state where adsorption is possible again by desorbing the ammonia.

However, a section located in the first row of the adsorption tower adsorbs a fluid with the highest ammonia concentration, and a section located in the last row adsorbs a fluid with the lowest ammonia concentration, such that a difference in adsorption efficiency or exhaustion rate of the adsorbent between the section located in the first row and the section located in the last row is large. In particular, the adsorbent in the section located in the first row is quickly exhausted and the adsorption and desorption cycles were shorter than those in other sections, thereby resulting in a short life-span and replacement time.

### SUMMARY

An object of the present disclosure is to provide an adsorption tower for controlling a fluid supply route to a plurality of beds, which controls the order of supplying a fluid differently according to adsorption values of each section, such that an adsorption efficiency may be improved, operation costs of an entire adsorption tower may be reduced, and life-spans of a plurality of beds may be extended, and thereby contributing to environmental friendliness and producing clean energy, and an operating control method thereof. Another object is the provision of a method to repeatedly adsorb and desorb a fluid by operating an adsorption tower.

The problems to be solved by the present disclosure are not limited to the above-described problems, and other problems not mentioned above may be clearly understood by those skilled in the art from the following descriptions.

To achieve the above objects, according to an aspect of the present invention, there is provided an adsorption tower for controlling a fluid supply route to a plurality of beds, which includes the plurality of beds disposed therein, an inlet port connected to one side and an outlet port connected to the other side thereof, the adsorption tower including: sensor units disposed inside the plurality of beds, respectively; a plurality of connection pipes which connect at least two or more of the inlet port or the outlet port and the plurality of beds; a plurality of valves connected to the plurality of connection pipes; a memory configured to store one or more instructions; and a processor configured to execute the one or more instructions stored in the memory, the processor is configured to: determine a fluid supply order to the plurality of beds according to adsorption values in the plurality of beds measured by the sensor units; and control the fluid supply route by opening and closing the valves according to the determined fluid supply order.

According to another aspect of the present invention, there is provided an operating control method of an adsorption tower for controlling a fluid supply route to a plurality of beds, which is executed by a computing device including a memory configured to store one or more instructions, and a processor configured to execute the one or more instructions stored in the memory, the method including: measuring adsorption values in a plurality of beds by sensor units disposed therein; determining, by the processor, a fluid supply order to the plurality of beds according to the measured adsorption values in the plurality of beds; and controlling, the fluid supply route by opening and closing valves according to the determined fluid supply order.

In addition, there is provided a computer program stored in a computer-readable recording medium to implement the present disclosure.

Further, there is provided a computer-readable recording medium configured to record a computer program to implement the present disclosure.

According to an embodiment of the present disclosure, the adsorption values may be managed for each separate bed, rather than collectively managing the beds of the adsorption tower. Thereby, the desorption cycles of beds in the first row and the last row of the adsorption tower may be matched, thereby improving the adsorption efficiency.

In addition, according to an embodiment of the present disclosure, the operation costs of an entire adsorption tower may be reduced, and the life-spans of a plurality of beds may be extended by unifying the adsorption and desorption cycles in the plurality of beds.

According to an embodiment of the present disclosure, the adsorption tower may be configured to repeatedly adsorb and desorb ammonia present in the fluid supply.

According to an embodiment of the present disclosure, the processor may be a dedicated artificial intelligence processor with a hardware structure specialized for processing a specific artificial intelligence model. The artificial intelligence model may be a neural network. The neural network may consist of a plurality of neural network layers, and each of the plurality of neural network layers has a plurality of weight values, performs neural network calculation through calculations between the calculation results of the previous layer and the plurality of weight values, and the he plurality of weight values assigned to the plurality of neural network layers may be optimized by the learning results of the artificial intelligence model.

According to an embodiment of the present disclosure, the method to repeatedly adsorb and desorb a fluid by operating an adsorption tower may comprise the steps of measuring adsorption values in a plurality of beds; determining, a fluid supply order to the plurality of beds according to the measured adsorption values in the plurality of beds; and controlling, the fluid supply route by opening and closing valves according to the determined fluid supply order.

In the method, the fluid adsorbed by the adsorption tower may be air feed containing ammonia and optionally volatile organic compounds (VOCs), and the method further comprises removing discharge air from which the ammonia and optionally the volatile organic compounds (VOCs) have been removed by applying a vapor recovery method while passing a first bed to a last bed of the multiple beds.

The effects of the present disclosure are not limited to the above-described effects, and other effects not mentioned above may be clearly understood by those skilled in the art from the following descriptions.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic diagram briefly illustrating the configuration of an adsorption tower according to an embodiment of the present disclosure;
FIG. 2 is a block diagram briefly illustrating the configuration of an adsorption tower for controlling a fluid supply route to a plurality of beds according to an embodiment of the present disclosure;
FIG. 3 is a schematic diagram illustrating the fluid flow according to a first mode of the adsorption tower for controlling a fluid supply route to a plurality of beds according to an embodiment of the present disclosure;
FIG. 4 is a schematic diagram illustrating the fluid flow according to a second mode of the adsorption tower for controlling a fluid supply route to a plurality of beds according to an embodiment of the present disclosure;
FIG. 5 is a schematic diagram illustrating the fluid flow according to a third mode of the adsorption tower for controlling a fluid supply route to a plurality of beds according to an embodiment of the present disclosure;
FIG. 6 is a flowchart illustrating procedures of an operating control method of an adsorption tower for controlling a fluid supply route to a plurality of beds according to the present disclosure; and
FIG. 7 is a block diagram illustrating a computing device according to an embodiment of the present disclosure.

### DETAILED DESCRIPTION OF THE EMBODIMENTS

The same reference numerals are denoted to the same components throughout the present disclosure. The present disclosure does not describe all elements of the embodiments, and general contents in the technical field to which the present disclosure pertains or overlapping contents between the embodiments will not be described. The terms `unit, module, member and block' used herein may be implemented as software or hardware, and depending on the embodiments, a plurality of `units, modules, members and blocks' may be implemented as one component, or one `part, module, member, or block' may include a plurality of components.

Throughout the specification, when the explanatory phrase a part is "connected" to another part is used, this includes not only the case where the part is "directly connected" to the other part, but also the case where the part is "indirectly connected" to the other part, and the indirect connection includes connection through a wireless communication network.

In addition, when the explanatory phrase a part "comprises or includes" a component is used, this means that the part may further include the component without excluding other components, unless there is a description opposite thereto.

Throughout the specification, when the explanatory phrase a member is located "on" another member is used, this includes not only the case where the member is in contact with the other member, but also the case where another member exists between the two members.

Terms such as first and second, etc. are used to distinguish one component from another component, and the components are not limited by the above-described terms.

The singular forms "a," "an" and "the" are intended to include the plural forms as well, unless the context clearly indicates otherwise.

The identification numerals for each step is used for the convenience of description. The identification numerals do not describe the order of each step, and each step may be performed differently from the specified order unless a specific order is clearly described in the context.

Hereinafter, the operating principle and embodiments of the present disclosure will be described with reference to the accompanying drawings.

In this specification, the `device according to the present disclosure' includes all various devices that can perform computational processing and provide results thereof to a user. For example, the device according to the present disclosure may include all of a computer, a server device and a portable terminal, or may be any form thereof.

Here, the computer may include, for example, a laptop or desktop computer, laptop PC, tablet PC, slate PC, etc. equipped with a web browser.

The server device is a server that processes information by performing communication with an external device, and may include an application server, computing server, database server, file server, game server, mail server, proxy server and web server.

The portable terminal is, for example, a wireless communication device with which portability and mobility are assured, and may include: all types of handheld wireless communication devices such as a personal communication system (PCS), global system for mobile communications (GSM), personal digital cellular (PDC), personal handy-phone system (PHS), personal digital assistant (PDA), international mobile telecommunication (IMT)-2000, code division multiple access (CDMA)-2000, wideband code division multiple access (W-CDMA), wireless broadband internet (WiBro) terminal, and smart phone, etc.; and wearable devices such as a watch, ring, bracelet, anklet, necklace, glasses, contact lenses, and head-mounted-device (HMD), etc.

Functions related to artificial intelligence according to the present disclosure are operated through a processor and a memory. The processor may include one or a plurality of processors. In this case, the one or plurality of processors may be general-purpose processors such as a CPU, AP, or digital signal processor (DSP), etc., dedicated graphics processors such as a GPU or vision processing unit (VPU), etc., or dedicated artificial intelligence processors such as an NPU. The one or plurality of processors control to process input data according to predefined operation rules or artificial intelligence models stored in the memory. Alternatively, when the one or plurality of processors are dedicated artificial intelligence processors, the artificial intelligence dedicated processors may be designed with a hardware structure specialized for processing a specific artificial intelligence model.

The predefined operation rule or artificial intelligence model are characterized by being generated or trained through learning. As used herein, the expression "being generated or trained through learning" means that the basic artificial intelligence model is trained using a large number of learning data by a learning algorithm, thereby generating a predefined operation rule or artificial intelligence model set to perform the desired characteristics (or purposes). This learning may be accomplished in the device itself on which the artificial intelligence is performed according to the present disclosure, or may be accomplished through a separate server and/or system. Examples of learning algorithms include supervised learning, unsupervised learning, semi-supervised learning, or reinforcement learning, but they are not limited to the above-described examples.

The artificial intelligence model may consist of a plurality of neural network layers. Each of the plurality of neural network layers has a plurality of weight values, performs neural network calculation through calculations between the calculation results of the previous layer and the plurality of weight values. The plurality of weight values assigned to the plurality of neural network layers may be optimized by the learning results of the artificial intelligence model. For example, the plurality of weight values may be updated so that loss or cost values obtained from the artificial intelligence model are reduced or minimized during the learning process. The artificial neural network may include a deep neural network (DNN) such as a convolutional neural network (CNN), deep neural network (DNN), recurrent neural network (RNN), restricted Boltzmann machine (RBM), deep belief network (DBN), bidirectional recurrent deep neural network (BRDNN), or Deep Q-Networks, etc., but it is not limited to the above-described examples.

According to an exemplary embodiment of the present disclosure, the processor may implement artificial intelligence. As used herein, the artificial intelligence refers to a machine learning method based on an artificial neural network which causes the machine to perform learning by imitating human biological neurons. Methodology of artificial intelligence may be divided, according to the learning method, into: supervised learning in which the answer (output data) to the question (input data) is defined by providing input data and output data together as training data; unsupervised learning in which the answer (output data) to the question (input data) is not determined by providing only input data without output data; and reinforcement learning in which a reverse is given from an external environment whenever any action is taken in the current state, and training is performed in a direction of maximizing this reverse. In addition, the methodology of artificial intelligence may be divided according to an architecture which is the structure of learning model. The architecture of widely used deep learning technology may be divided into a convolutional neural network (CNN), recurrent neural network (RNN), transformer, or generative adversarial networks (GAN), etc.

The device and system of the present disclosure may include artificial intelligence models. The artificial intelligence model may be implemented as a single artificial intelligence model or a plurality of artificial intelligence models. The artificial intelligence model may consist of neural networks (or artificial neural networks), and may include statistical learning algorithms which mimic biological neurons in machine learning and cognitive science. The neural network may refer to an overall model in which artificial neurons (nodes) forming a network through the combination of synapses change the coupling strength of the synapses through learning to have problem solving skills. Neurons in the neural network may include the combination of weight values or biases. The neural network may include one or more layers consisting of one or more neurons or nodes. As an embodiment, the device may include an input layer, a hidden layer and an output layer. The neural network consisting of the device may infer the result (output) to be predicted from arbitrary input (input) by changing the weight values of neurons through learning. The processor may generate a neural network, cause the neural network to perform training through learning, perform calculation based on the received input data, generate information signals based on the execution results, or cause the neural network to perform retraining. Models of the neural network may include various types of models such as GoogleNet, AlexNet, VGG Network, etc., for example, convolution neural network (CNN), region with convolution neural network (R-CNN), region proposal network (RPN), recurrent neural network (RNN), stacking-based deep neural network (S-DNN) state-space dynamic neural network (S-SDNN), deconvolution network, deep belief network (DBN), restricted Boltzmann machine (RBM), fully convolutional network (FCN), long short-term memory (LSTM) network, classification network, and the like, but it is not limited thereto. The processor may include one or more processors to perform calculations according to models of the neural network. For example, the neural network may include a deep neural network.
The neural network may include the convolutional neural network (CNN), recurrent neural network (RNN), perceptron, multilayer perceptron, feed forward (FF), radial basis network (RBF), deep feed forward (DFF), long short term memory (LSTM), gated recurrent unit (GRU), auto encoder (AE), variational auto encoder (VAE), denoising auto encoder (DAE), sparse auto encoder (SAE), Markov chain (MC), Hopfield network (HN), Boltzmann machine (BM), restricted Boltzmann machine (RBM), deep belief network (DBN), deep convolutional network (DCN), deconvolutional network (DN), deep convolutional inverse graphics network (DCIGN), generative adversarial network (GAN), liquid state machine (LSM), extreme learning machine (ELM), echo state network (ESN), deep residual network (DRN), differential neural computer (DNC), neural turning machine (NTM), capsule network (CN), Kohonen network (KN) and attention network (AN), but it is not limited thereto. Those skilled in the art will understand that it may include any neural network.

According to an exemplary embodiment of the present disclosure, the processor may include various artificial intelligence structures and algorithms such as GoogleNet, AlexNet, VGG Network, etc., for example, convolution neural network (CNN), region with convolution neural network (R-CNN), region proposal network (RPN), recurrent neural network (RNN), stacking-based deep neural network (S-DNN) state-space dynamic neural network (S-SDNN), deconvolution network, deep belief network (DBN), restricted Boltzmann machine (RBM), fully convolutional network (FCN), long short-term memory (LSTM) network, classification network, generative modeling, explainable AI, Continual AI, representation learning, AI for material design, BERT for natural language processing, SP-BERT, MRC/QA, Text Analysis, Dialog System, GPT-3, GPT-4, Visual Analytics for vision processing, Visual Understanding, Video Synthesis, Anomaly Detection for ResNet data intelligence, Prediction, Time-Series Forecasting, Optimization, Recommendation, Data Creation, and the like, but it is not limited thereto.
Hereinafter, embodiments of the present disclosure will be described in detail with reference to the accompanying drawings.

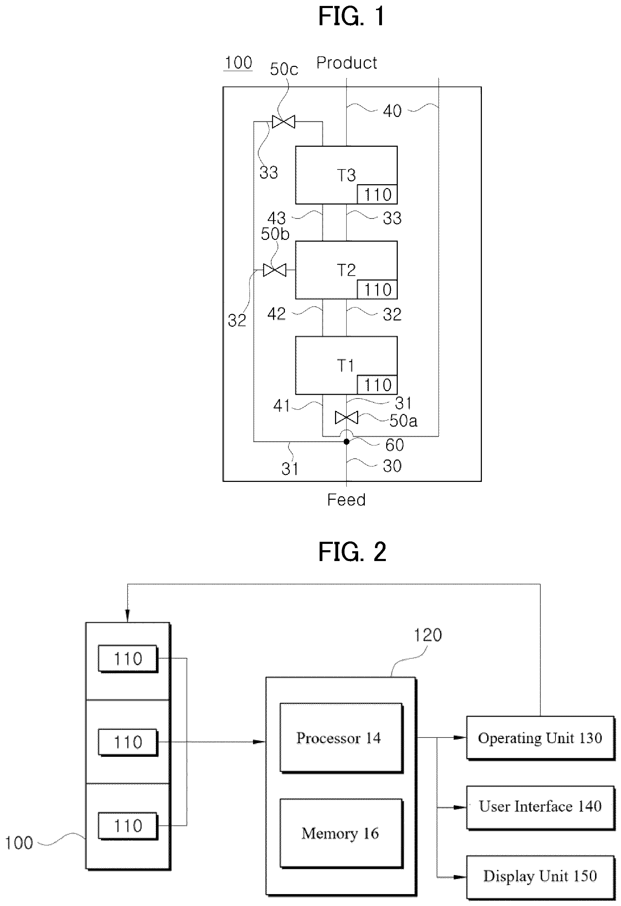

FIG. 1 is a schematic diagram briefly illustrating the configuration of an adsorption tower 100 according to an embodiment of the present disclosure. Hereinafter, the adsorption tower 100 for controlling a fluid supply route to a plurality of beds and a control method thereof will be described in detail with reference to FIGS. 2 to 6.

As shown in FIG. 1, the adsorption tower 100 according to the present disclosure may include a plurality of beds T1, T2 and T3 disposed therein, an inlet port 30 connected to one side and an outlet port 40 connected to the other side thereof. A feed containing ammonia, nitrogen and hydrogen is supplied through the inlet port 30, and the ammonia may be adsorbed through an adsorption process to discharge a product containing nitrogen and hydrogen through the outlet port 40.

In other words, the adsorption tower 100 may receive air (feed) containing ammonia, volatile organic compounds (VOCs), etc., and discharge air (product) from which the ammonia and volatile organic compounds (VOCs) have been removed by applying a vapor recovery method such as recompression, condensation, and activated carbon adsorption while passing from T1 which is a first bed to T3 which a last bed.

For example, in order to regenerate the used adsorption tower 100, the desorption gas may be introduced into the adsorption tower 100 to desorb the ammonia inside the adsorption tower 100, and then some or all of the desorption gas may be discharged along with the desorbed ammonia. Alternatively, the ammonia may be desorbed and removed using vacuum or heat without the desorption gas.

Therefore, although not shown in the drawings, the respective beds T1, T2 and T3 may be connected with separate discharge pipes for removing the ammonia and some or all of the desorption gas desorbed through a desorption process from each of the beds T1, T2 and T3, or ammonia by-products to an outside.

The adsorption tower 100 may be classified into the first bed T1, second bed T2, third bed T3, etc. by dividing the region from a location close to the inlet port 30 where the feed is input to the outlet port 40 where the product is discharged, and sensor units 110 may be installed in each bed. The number of the beds may be changed as necessary, and the sensor units 110 may include at least one of a pressure sensor for measuring an internal pressure of the adsorption tower 100, a temperature sensor for measuring an internal temperature of the adsorption tower 100, a humidity sensor for measuring an internal humidity of the adsorption tower 100, a gas sensor for measuring a gas component inside the adsorption tower 100 to determine a purity of the extracted hydrogen, and an adsorbent sensor.

When an ammonia concentration measured by the sensor unit 110 in the first bed T1 is a preset value or more, or when a value measured in the first bed T1 and a value measured in the third bed T3 are the preset value or more, a computing device 120 (see FIG. 2) configured to process the operating of the adsorption tower 100 may determine that the adsorbent placed in the first bed T1 has reached a saturation and perform the desorption process.

The computing device 120 (see FIG. 2) may determine whether the pressure or temperature is controlled within a predetermined range to maintain adsorption efficiency using the sensor units 110, and calculate result values regarding hydrogen extraction efficiency using the detected humidity or hydrogen purity.

In addition, the adsorbent sensor of the sensor unit 110 may measure the state of the adsorbent inside the adsorption tower, evaluate the life-span and performance of the adsorbent, and obtain information capable of predicting the replacement time of the adsorbent.

Hereinafter, the gas supplied or discharged as the feed or product will be collectively referred to as a fluid.

In addition, the adsorption tower 100 may include a plurality of connection pipes 31, 3 2, 33, 41, 42 and 43 for connecting the inlet port 30 or the outlet port 40 and at least two of the plurality of beds T1, T2 and T3. The connection pipe may include supply pipes 31, 32 and 33 for supplying a fluid and discharge pipes 41, 42 and 43 for discharging the fluid.

Specifically, a supply pipe 31 for supplying the fluid to the first bed T1, a supply pipe 32 for supplying the fluid to the second bed T2, and a supply pipe 33 for supplying the fluid to the third bed T3 may be connected thereto.

In addition, a branch pipe 60 may be disposed so that the fluid supplied from the inlet port 30 is supplied to the supply pipes 31, 32 and 33 connected to the respective beds T1, T2 and T3.

As an embodiment, as shown in FIG. 1, supply valves 50a, 50b and 50c are disposed in the supply pipes 31, 32 and 33 in a reverse direction between the beds T1, T2 and T3 connected to the branch pipe 60, and the supply valve 50 may be omitted in the supply pipes 31, 32 and 33 in a forward direction to execute a first mode.

As an embodiment, the supply valves 50 or the discharge valves may be disposed in all connection pipes.

Further, a discharge pipe 41 for discharging the fluid from the first bed T1, a discharge pipe 42 for discharging the fluid from the second bed T2, and a discharge pipe 43 for discharging the fluid from the third bed T3 may be connected thereto.

Meanwhile, the discharge pipe 41 for discharging the fluid from the first bed T1 may be the supply pipe 32 for supplying the fluid to the second bed T2, and the discharge pipe 42 for discharging the fluid from the second bed T2 may be the supply pipe 33 for supplying the fluid to the third bed T3. In FIG. 1, the supply pipes 31, 32 and 33 and the discharge pipes 41, 42 and 43 are drawn separately, but these may be connection pipes for flowing the fluid individually in each mode, and the same connection pipes are shown separately according to functions thereof.

In addition, FIG. 1 shows only three beds, but two or more beds may be disposed depending on the adsorption process or circumstances.

As shown in FIG. 1, the valves may be connected to each connection pipe. The valves may include the supply valves 50 or the discharge valves (not shown).

When performing adsorption within each bed, the supply valves 50 may be opened to supply the fluid such as a feed, and when performing desorption due to an increase in the adsorption value within each bed, the supply valves 50 and the discharge valves may be closed.

The supply valves 50 are shown only in some of the supply pipes in FIG. 1, but the supply valves 50a, 50b and 50c may be disposed in some or all of the supply pipes 31, 32 and 33 for connecting the respective beds T1, T2 and T3 with each other, or the supply pipes for connecting the inlet port 30 and the respective beds T1, T2 and T3.

Although the discharge valve is not shown in FIG. 1, the discharge valves may be disposed in some or all of the discharge pipes 41, 42 and 43 for connecting the respective beds T1, T2 and T3 with each other, or the discharge pipes for connecting the outlet port 40 and the respective beds T1, T2 and T3.

As shown in FIG. 2, the adsorption tower 100 for controlling a fluid supply route to a plurality of beds according to the present disclosure may include: the sensor units 110 configured to measuring internal state of the respective beds T1, T2 and T3; a computing device 120 including a memory 16 configured to store one or more instructions and a processor 14 configured to execute the one or more instructions stored in the memory 16; and an operating unit 130 configured to operate the adsorption tower 100 according to an adsorption cycle and a desorption cycle set based on the internal state of the adsorption tower 100.

The sensor units 110 may be installed in a plurality of beds defined by separating and partitioning the inside of the adsorption tower 100.

The processor 14 and the memory 16 may be disposed together or separately in one or more computing devices 120. The operating of the adsorption tower 100 may be controlled using the computing device 120 so as to operate the adsorption tower 100 while the efficiency thereof is maintained at a predetermined level or more.

It is possible to further include a user interface 140 which may receive user input for parameters required to operate the adsorption tower 100.

In addition, the user interface 140 may provide an alarm to a user when an abnormal state occurs, and receive information on an abnormal situation processing process.

It is possible to further include a display unit 150 which may provide an alarm for the operating of the adsorption tower 100 or display to monitor an operation status of the adsorption tower 100 in real time, as well as display the values measured by the sensor units 110 or the degree of current progress of the desorption process.

In addition, the adsorption tower 100 according to the present disclosure may further include an artificial intelligence model which is disposed in the computing device 120 together or connected thereto through a separate server or cloud.

In one embodiment, the processor 14 may be configured to: output the corresponding adsorption cycle and desorption cycle according to the sensing data of the sensor units 110 using the trained artificial intelligence model; and when the sensing data is within a preset optimal range, transmit a command to operate the adsorption tower according to the output adsorption cycle and desorption cycle to the operating unit 130.

Alternatively, if the sensing data exceeds the optimal range, the processor 14 may be configured to transmit a command to execute the abnormal situation processing process according to preset exception adsorption cycle and exception desorption cycle to the operating unit 130.

The adsorption tower 100 according to the present disclosure may be configured to identify internal states of the beds based on data collected by the sensor unit 110 to determine whether there is a bed where the adsorption process can be no longer performed, and may be configured to detect point in time when the desorption process needs to be performed in real time using the artificial intelligence model that has performed training a normal state for the pressure, temperature, humidity, concentration, and the like of the gas in the adsorption tower 100 according to each time point in the adsorption process.

Through this, it is possible to manage the adsorption and desorption of the adsorbent by training the adsorption and desorption cycles of each bed by the artificial intelligence model so that the adsorption and desorption cycles for all beds are unified.

The processor 14 may repeatedly self-diagnose at a preset cycle whether the sensing data measured by the sensor units 110 deviate from the optimal range or whether patterns of previous sensing data and subsequent sensing data are different, and when an abnormal state occurs, detect the abnormal state in real time using the artificial intelligence model.

In addition, when performing self-diagnosis, the processor 14 may sense not only an abnormal state inside the adsorption tower 100, but also a sensor error in at least one sensor of the sensor unit 110, or detect a communication error between the sensor unit 110 and the processor 14, and when a sensor error or communication error is detected, transmit a command to stop the operating of the adsorption tower 100 to the operating unit 130.

In general, it can be seen that the contact time with the feed is delayed toward the third bed T3 from the first bed T1, such that the replacement time of the adsorbent in T3 occurs later than in T1, and thereby the adsorbent replacement time of the adsorbent in the respective beds T1, T2 and T3 are different from each other.

For example, the adsorbent in the first bed T1 has reached the replacement time, whereas the adsorbent in the third bed T3 may still have sufficient time left for replacement.

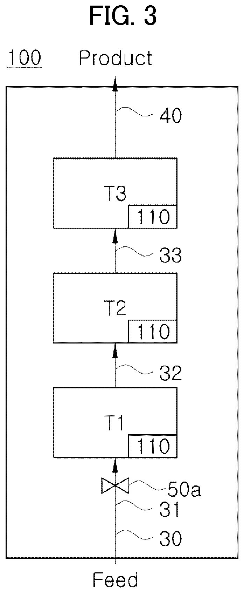

When there is sufficient replacement time for the respective beds T1, T2 and T3, as shown in FIG. 3, the adsorption tower 100 according to the present disclosure may execute the first mode.

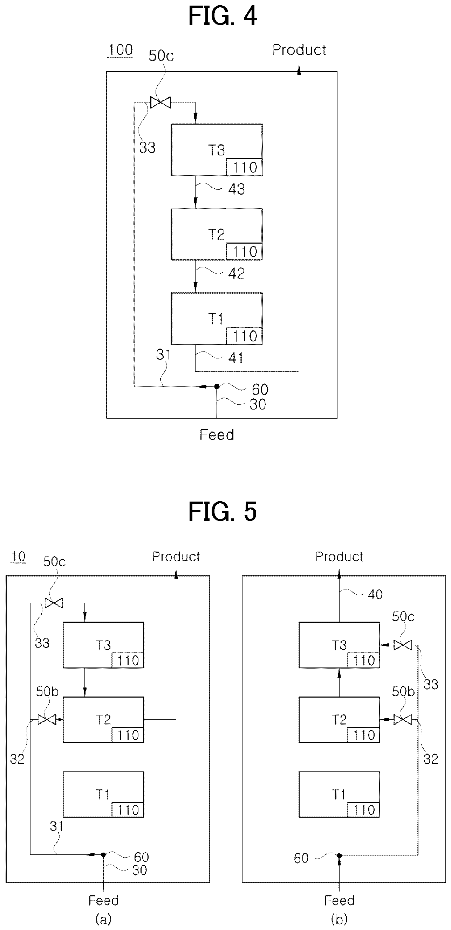

Alternatively, when the adsorption value of the first bed T1 is decreased and the adsorption value of the adsorbent reaches the saturation, a second mode shown in FIG. 4 or a third mode shown in FIG. 5 may be executed.

Hereinafter, the connection pipes shown in FIGS. 3 to 5 are connection pipes through which the fluid flows, and connection pipes not shown therein are a state where the fluid does not flow by closing the supply valve 50.

As shown in FIG. 3, when the adsorption values measured by the sensor units 110 of the respective beds T1, T2 and T3 are less than a preset threshold value, the processor 14 of the adsorption tower 100 according to the present disclosure determines that the adsorption process can be performed since the adsorbent has not yet reached the saturation, and may execute the first mode.

In the first mode, adsorption in a direction, in which the fluid flowing from the inlet port 30 is discharged to the outlet port 40 passing through the first bed T1, the second bed T2 and the third bed T3 ("forward adsorption"), may be performed.

The processor 14 may close the supply valves 50b and 50c for connecting the inlet port 30 or the branch pipe 60 with the second bed T2 or the third bed T3, and open the supply valve 50a connected to the first bed T1.

On the other hand, as shown in FIG. 4, when the adsorption value in the first bed T1 measured by the sensor unit 110 of the first bed T1 exceeds the preset threshold value, the processor 14 of the adsorption tower 100 according to the present disclosure determines that the adsorption process cannot be performed since the adsorbent in the first bed T1 has reached saturation, and may execute the second mode.

In addition, when a difference between the adsorption value in the first bed T1 measured by the sensor unit 110 of the first bed T1 and the adsorption value in the third bed T3 measured by the sensor unit 110 of the third bed T3 exceeds a preset threshold value, it is determined that the adsorption process cannot be performed since the adsorbent in the first bed T1 has reached saturation, and the second mode may be executed.

In the second mode, adsorption in a direction, in which the fluid flowing from the inlet port 30 is discharged to the outlet port 40 passing through the third bed T3, the second bed T2 and the first bed T1 ("reverse adsorption"), may be performed.

The processor 14 may control to close the supply valve 50a connected between the branch pipe 60 and the first bed T1, and open the supply valve 50c connected between the branch pipe 60 and the third bed T3, so as to supply the fluid in the reverse direction from the third bed T3.

In other words, the forward direction is a direction toward the top from the bottom of the adsorption tower 100, and the reverse direction is a reverse order of the beds which are sequentially disposed in a direction toward the bottom from the top.

As an embodiment, it may be controlled so that the fluid from the inlet port 30 does not flow to the first bed T1 and the second bed T2 but directly flows to the third bed T3 by closing the supply valve 50b disposed in the supply pipe 32.

Therefore, in the first mode, the adsorption process is performed in the forward direction, and if the adsorption value of the adsorbent in the first bed T1 is high or the adsorption rate is significantly different from that in the third bed T3, the adsorption process is performed in the reverse direction in the second mode, such that the adsorption efficiency of all beds T1, T2 and T3 may be maintained at a predetermined level and managed efficiently.

As another example, as shown in FIG. 5, when the adsorption value in the first bed T1 measured by the sensor unit 110 of the first bed T1 exceeds the preset threshold value, the processor 14 of the adsorption tower 100 according to the present disclosure determines that the adsorption process cannot be performed since the adsorbent in the first bed T1 has reached saturation, and may execute the third mode.

In addition, when the difference between the adsorption value in the first bed T1 measured by the sensor unit 110 of the first bed T1 and the adsorption value in the third bed T3 measured by the sensor unit 110 of the third bed T3 exceeds a preset threshold value, it is determined that the adsorption process cannot be performed since the adsorbent in the first bed T1 has reached saturation, and the third mode may be executed.

In the third mode shown in FIG. 5(a), the fluid may be supplied in the reverse direction by closing the supply valve 50a connected between the inlet port 30 or the branch pipe 60 and the first bed T1, and opening the supply valve 50b connected between the inlet port 30 or the branch pipe 60 and the second bed T2, or the supply valve 50c connected between the inlet port 30 or the branch pipe 60 and the third bed T3.

Alternately, in the third mode shown in FIG. 5(b), the fluid may be supplied in the forward direction by closing the supply valve 50a connected between the inlet port 30 or the branch pipe 60 and the first bed T1, and opening the supply valve 50b connected between the inlet port 30 or the branch pipe 60 and the second bed T2, or the supply valve 50c connected between the inlet port 30 or the branch pipe 60 and the third bed T3.

The control according to FIGS. 5(a) and 5(b) may be selected by additionally considering the difference in the adsorption value between the second bed T2 and the third bed T3. In other words, if the difference in the adsorption value exceeds the preset value, the processor 14 may perform the control according to FIG. 5(a), and if the value is the preset value or less, perform the control according to FIG. 5(b).

Accordingly, the desorption process may be performed in the first bed T1, and the adsorption process may be performed in the second bed T2 or the third bed T3. To this end, it is possible to prevent the fluid from flowing by closing the supply valve 50a or the discharge valve (not shown) of the first bed T1, and allow the fluid to flow in the reverse or forward direction by opening the supply valves 50b and 50c or the discharge valves (not shown) of the second bed T2 and third bed T3.

Meanwhile, when the adsorption value measured by the sensor unit 110 in the first bed T1 is decreased to the threshold value or less again, the processor 14 of the adsorption tower 100 according to the present disclosure may open the supply valve 50a connected between the branch pipe 60 and the first bed T1. The processor 14 may control so that the adsorption process is performed sequentially in the plurality of beds T1, T2 and T3 including the first bed T1, which is intended to return to the first mode of shown in FIG. 3, thereby preventing an occurrence of an abnormal state due to an error in the sensor unit 110.

As an embodiment, the plurality of beds T1, T2 and T3 contain different types of adsorbents placed therein. An efficiency of the adsorbent in the first bed T1 may be lower than that of the adsorbent in the second bed T2, and the efficiency of the adsorbent in the second bed T2 may be lower than that of the adsorbent in the third bed T3. The first bed T1, which comes into contact with a higher concentration of ammonia, uses a cheaper adsorbent with lower adsorption efficiency, and the second bed T2 and third bed T3, which come into contact with a lower concentration of ammonia, sequentially use more expensive adsorbents with higher adsorption efficiency.

As an embodiment, the type of adsorbent may be determined by considering the temperature conditions at upper or lower portion of the adsorption tower 100, or each bed may be disposed in the order of the desorption temperature of the adsorbent from the highest to the lowest.

Therefore, by dividing the entire bed into a plurality of beds T1, T2 and T3 and disposing the sensor units 110 for each bed, the efficiency of the adsorbent in the upper and lower portions of the adsorption tower 100 may be managed uniformly and the adsorption process may be performed with optimal efficiency. In this case, the optimal efficiency refers to a state where a predetermined level or more of adsorption efficiency can be maintained while reducing costs by delaying the replacement time of the adsorbent as much as possible.

Therefore, the adsorption tower 100 according to the present disclosure may be driven to identify the internal state of each internal compartment, and perform separate adsorption and desorption processes based on the identified internal state.
As an embodiment, if it is determined that the detected temperature, humidity or pressure deviates from the expected range thereof according to the current amount of adsorbent and the progress of the internal process of the adsorption tower 100 using the artificial intelligence model, it is possible to provide an alarm indicating that the first mode should be changed to the second mode or the third mode through the display unit 150.
The adsorption tower 100 including the plurality of beds may be achieved by dividing one adsorption tower 100 into a plurality of sections, or combing a plurality of adsorption towers 100 in series to finally separate the space where each adsorbent is placed.

In addition, the adsorption tower 100 according to the present disclosure may determine the feed supply order between the plurality of beds T1, T2 and T3, and the generation of a new feed supply route except for the bed that performs regeneration at the predicted point in time when entering the adsorbent regeneration cycle including the desorption process using the artificial intelligence model.

Specifically, when the feed is supplied to the inlet port 30 of the adsorption tower 100 and flows to the outlet port 40, a pressure drop phenomenon occurs in which the pressure of the inlet port 30 is higher than that of the outlet port 40. In other words, only when the pressure of the inlet port 30 is higher than that of the outlet port 40, normal flow of the fluid can be formed. To this end, it is preferable that a difference between a pressure P1 at the inlet port 30 and a pressure P2 at the outlet port 40 is maintained constantly.

However, when the flow rate becomes faster or the flow rate is increased depending on the internal situation of the adsorption tower 100, a gap between P1 and P2 is increased, and the P1-P2 value continues to increase, and considering the environment in which the magnitude of P1 cannot be increased indefinitely, the gap between P1 and 2P should be controlled.

Therefore, when it is determined that the flow rate is increased or an internal situation where the flow rate is increased occurs based on the artificial intelligence model, the adsorption tower 100 according to the present disclosure may command to change a real-time dynamic structure in a way of further connecting a plurality of beds, or connecting serially connected beds in parallel, etc. By controlling the flow velocity and flow rate of the fluid by changing the real-time dynamic structure of the plurality of beds T1, T2 and T3, it is possible to prevent the value of P1-P2 from being increased, and stably supply the fluid without increasing the value of P1.

As an embodiment, the artificial intelligence model may monitor the state of each bed in real time through the sensor units 110 provided in the plurality of beds T1, T2 and T3.

In some embodiments, when a flow rate or a flow velocity in the beds is a preset threshold value or more, or a pressure difference between the inlet port and outlet port of the adsorption tower is a preset threshold value or more, the processer is configured to determine the fluid supply order or the fluid supply route so as to control the pressure between the inlet port and the outlet port using an artificial intelligence model, and transmit a command to change a connection structure of the plurality of beds based on the determined fluid supply order or fluid supply route to the adsorption tower.

In addition, as an embodiment, the artificial intelligence model may be trained to determine whether the flow rate or flow velocity in the bed is a threshold value or more based on the flow rate or flow velocity values of the fluid acquired from the sensor unit 110. In this case, the sensor unit 110 may include a flow rate sensor or a flow velocity sensor.

As an embodiment, when it is determined that the flow rate or flow velocity in the bed is the threshold value or more by the trained artificial intelligence model, it is possible to convert the arrangement of the plurality of beds T1, T2 and T3 from a serial connection to a parallel connection.

Alternatively, as an embodiment, when the flow rate or flow velocity in the bed the threshold value or more, or when the pressure difference between the inlet port and outlet port of the adsorption tower is threshold value or more, the artificial intelligence model may be trained to determine a fluid supply route excluding beds that require regeneration and including additional beds by connecting additional beds. The artificial intelligence model may be trained to determine the final method among a plurality of methods for controlling to decrease the flow rate or flow velocity in consideration of the resources required, such as time and costs, based on the internal situation of the adsorption tower 100. Through this, the flow rate or flow velocity within the plurality of beds T1, T2 and T3 may be controlled.

Meanwhile, a method for controlling the operating of the adsorption tower 100 according to the present disclosure may be executed by the computing device 120 including the memory 16 configured to store one or more instructions, and the processor 14 configured to execute the one or more instructions stored in the memory 16.

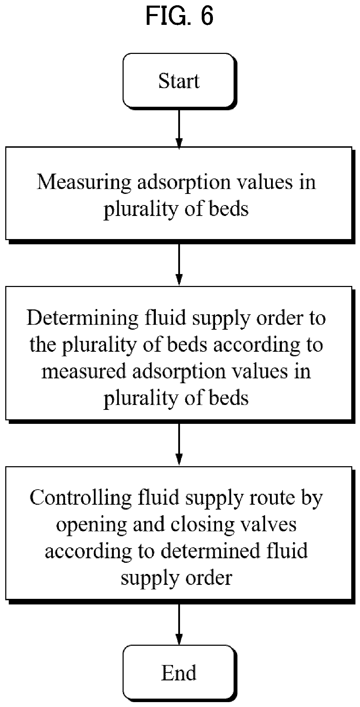

As shown in FIG. 6, the method for controlling the operating of the adsorption tower 100 according to the present disclosure may include the steps of: measuring adsorption values in the plurality of beds T1, T2 and T3 (S610); determining a fluid supply order to the plurality of beds T1, T2 and T3 according to the measured adsorption values in the plurality of beds T1, T2 and T3 (S620); and controlling the fluid supply route by opening and closing the valves according to the determined fluid supply order (S630).

If the adsorption values measured by the sensor units 110 of the respective beds T1, T2 and T3 in step S620 are less than the preset threshold value, a forward adsorption order, in which the flued is discharged to the outlet port 40 passing through the first bed T1, the second bed T2 and the third bed T3, may be determined.

In step S630, the first mode may be executed to control the supply valves 50 or the discharge valves so that the fluid flowing from the inlet port 30 is discharged to the outlet port 40 passing through the first bed T1, the second bed T2 and the third bed T3.

Specifically, the supply valves 50b and 50c for connecting the inlet port 30 or the branch pipe 60 with the second bed T2 or the third bed T3 may be closed, and the supply valve 50a connected to the first bed T1 may be opened.

On the other hand, when the adsorption value in the first bed T1 measured by the sensor unit 110 of the first bed T1 in step S620 exceeds the preset threshold value, a reverse adsorption order, in which the flued is discharged to the outlet port 40 passing through the third bed T3, the second bed T2 and the first bed T1, may be determined.

Alternatively, in step S620, when the difference between the adsorption value in the first bed T1 measured by the sensor unit 110 of the first bed T1 and the adsorption value in the third bed T3 measured by the sensor unit 110 of the third bed T3 exceeds the preset threshold value, the reverse adsorption order, in which the flued is discharged to the outlet port 40 passing through the third bed T3, the second bed T2 and the first bed T1, may be determined.

In step S630, the second mode may be executed to control the supply valves 50 or the discharge valves so that the fluid flowing from the inlet port 30 is discharged to the outlet port 40 passing through the third bed T3, the second bed T2 and the first bed T1.

Specifically, it may control to close the supply valve 50a connected between the branch pipe 60 and the first bed T1, and open the supply valve 50c connected between the branch pipe 60 and the third bed T3, so as to supply the fluid in the reverse direction from the third bed T3.

Alternatively, in step S620, it may be determined to exclude the first bed T1 with adsorption value exceeded the threshold value from the adsorption process and perform the desorption process.

In step S630, the third mode may be executed to supply the fluid in the reverse or forward direction by closing the supply valve 50a connected between the inlet port 30 or the branch pipe 60 and the first bed T1, and opening the supply valve 50b connected between the inlet port 30 or the branch pipe 60 and the second bed T2, or the supply valve 50c connected between the inlet port 30 or the branch pipe 60 and the third bed T3.

The overlapping contents with the above-mentioned contents will not be described for brevity.

Meanwhile, the adsorption values of the respective beds T1, T2 and T3 may be detected and confirmed using the temperature sensors of the sensor units 110. As the adsorption is activated, the temperature is increased, but as the adsorption efficiency is decreased and the replacement time of the adsorbent approaches, the temperature is decreased. Thereby, it is possible to grasp a change in the state of the adsorbent depending on a change in the temperature. Thus, if the temperature is decreased, it may be determined that the temperature exceeds the preset threshold value, whereas if the temperature is remained high, it may be determined that the adsorption value of the adsorbent is the preset threshold value or less.

The adsorption tower may be configured to repeatedly adsorb and desorb ammonia present in the fluid supply.

The processor may be a dedicated artificial intelligence processor with a hardware structure specialized for processing a specific artificial intelligence model. The artificial intelligence model may be a neural network. The neural network may consist of a plurality of neural network layers, and each of the plurality of neural network layers has a plurality of weight values, performs neural network calculation through calculations between the calculation results of the previous layer and the plurality of weight values, and the he plurality of weight values assigned to the plurality of neural network layers may be optimized by the learning results of the artificial intelligence model.

A method to repeatedly adsorb and desorb a fluid by operating an adsorption tower may comprise the steps of measuring adsorption values in a plurality of beds; determining, a fluid supply order to the plurality of beds according to the measured adsorption values in the plurality of beds; and controlling the fluid supply route by opening and closing valves according to the determined fluid supply order.

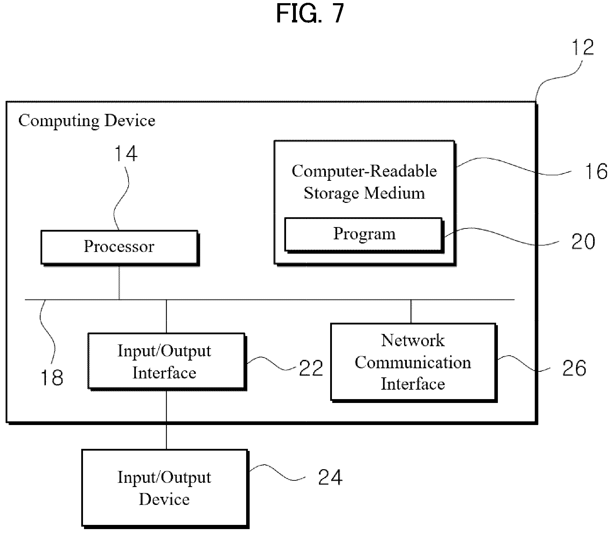

In the method, the fluid adsorbed by the adsorption tower may be air feed containing ammonia and optionally volatile organic compounds (VOCs), and the method further comprises removing discharge air from which the ammonia and optionally the volatile organic compounds (VOCs) have been removed by applying a vapor recovery method while passing a first bed to a last bed of the multiple beds. Meanwhile, FIG. 7 shows a computing device according to an embodiment of the present disclosure, and as shown in FIG. 7, a operating control method of the adsorption tower 100 for controlling a fluid supply route to a plurality of beds according to the present disclosure may be implemented in the form of a recording medium which stores instructions executable by a computer. The instructions may be stored in the form of program code, and when executed by the processor, may generate a program module to perform operations of the disclosed embodiments. The recording medium may be implemented as a computer-readable recording medium.

The computing device 120 of the adsorption tower 100 according to the present disclosure may correspond to a computing device 12, and the computing device 12 may include at least one processor 14, a computer-readable storage medium (memory) 16 including a program 20 and a communication bus 18. In addition, the computing device 12 may include one or more input/output interfaces 22 which provide interfaces for input/output devices 24 and one or more network communication interfaces 26.

The user interface 140 and the display unit 150 of the present disclosure may correspond to one or more input/output interfaces 22 which provide interfaces for the input/output devices 24. Accordingly, all the respective components of the adsorption tower operating control device for controlling fluid flow for each section according to the present disclosure may be included in the above-described single computing device 12 or each component thereof may be implemented in separate devices.

The user interface 140 and the display unit 150 of the present disclosure may correspond to one or more input/output interfaces 22 which provide interfaces for the input/output devices 24. Accordingly, all the respective components of the adsorption tower 100 for controlling a fluid supply route to a plurality of beds according to the present disclosure may be included in the above-described single computing device 12 or each component thereof may be implemented in separate devices.

As above, the disclosed embodiments have been described with reference to the accompanying drawings. It will be understood by persons skilled in the art to which the present disclosure pertains that the present disclosure may be embodied in forms different from the disclosed embodiments without changing the technical idea or essential features of the present disclosure. The disclosed embodiments are illustrative, and should not be interpreted as limiting.

## Claims

1. An adsorption tower (100) for controlling a fluid supply route to a plurality of beds, which includes the plurality of beds disposed therein, an inlet port (30) connected to one side and an outlet port (40) connected to the other side thereof, the adsorption tower (100) further comprising:
sensor units (110) disposed inside the plurality of beds, respectively;
a plurality of connection pipes (31-33, 41-43) which connect at least two or more of the inlet port (30) or the outlet port (40) and the plurality of beds;
a plurality of valves (50, 50a-c) connected to the plurality of connection pipes (31-33, 41-43);
a memory (16) configured to store one or more instructions; and
a processor (14) configured to execute the one or more instructions stored in the memory (16),
wherein the processor (14) is configured to: determine a fluid supply order to the plurality of beds according to adsorption values in the plurality of beds measured by the sensor units (110); and control the fluid supply route by opening and closing the valves (50, 50a-c) according to the determined fluid supply order.

2. The adsorption tower (100) according to claim 1, wherein the connection pipes (31-33, 41-43) comprise a branch pipe (60) which connects the inlet port (30) and at least one of the plurality of beds, respectively, and
the valves (50, 50a-c) comprise supply valves (50, 50a-c) connected between the branch pipe (60) and at least one of the plurality of beds.

3. The adsorption tower (100) according to claim 2, wherein the plurality of beds comprise at least a first bed disposed in a first row and a second bed disposed in a last row, and
when the adsorption value in the first bed measured by the sensor unit (110) exceeds a preset threshold value, the processor (14) is configured to control the adsorption tower (100) to close a supply valve (50, 50a-c) connected between the branch pipe (60) and the first bed and open a supply valve (50, 50a-c) connected between the branch pipe (60) and the second bed, so as to supply a fluid in a reverse direction from the second bed,
wherein the reverse direction is a reverse order of the beds which are sequentially disposed from the first bed.

4. The adsorption tower (100) according to claim 2 or claim 3, wherein the plurality of beds comprise at least a first bed disposed in a first row and a second bed disposed in a last row, and
when a difference between a fluid concentration in the first bed and a fluid concentration in the second bed measured by the sensor units (110) exceeds a preset threshold value, the processor (14) is configured to control the adsorption tower (100) to close a supply valve (50, 50a-c) connected between the branch pipe (60) and the first bed and open a supply valve (50, 50a-c) connected between the branch pipe (60) and the second bed, so as to supply a fluid in a reverse direction from the second bed,
wherein the reverse direction is defined to be a reverse order of the beds which are sequentially disposed from the first bed.

5. The adsorption tower (100) according to any one of claims 2 to 4, wherein the plurality of beds comprise at least a first bed, a second bed, and a third bed which are sequentially disposed in this order, and
when an adsorption value in the first bed measured by the sensor unit (110) exceeds a preset threshold value, the processor (14) closes a supply valve (50, 50a-c) connected to the first bed and open a supply valve (50, 50a-c) connected between the branch pipe (60) and the second bed or the third bed, so as to supply a fluid in a forward direction or a reverse direction,
wherein the forward direction is defined to be an order of beds which are sequentially disposed from the first bed, and the reverse direction is a reverse order of the forward direction.

6. The adsorption tower (100) according to claim 5,
wherein the processor (14) is configured to control the adsorption tower (100) to perform a desorption process in the first bed and an adsorption process in the second bed or the third bed.

7. The adsorption tower (100) according to claim 6, wherein, when the adsorption value measured by the sensor unit (110) in the first bed is the threshold value or less, the processor (14) is configured to control the adsorption tower (100) to open the supply valve (50, 50a-c) connected between the branch pipe (60) and the first bed, so as to sequentially perform the adsorption process in the plurality of beds including the first bed.

8. The adsorption tower (100) according to claim 7, wherein the plurality of beds comprise at least a first bed, a second bed, and a third bed which are sequentially disposed in this order, and
the plurality of beds contain different types of adsorbents placed therein, wherein an efficiency of the adsorbent in the first bed is lower than that of the adsorbent in the second bed, and the efficiency of the adsorbent in the second bed is lower than that of the adsorbent in the third bed.

9. The adsorption tower (100) according to claim 8, wherein the sensor units (110) comprise at least one sensor selected from a pressure sensor, a temperature sensor, a humidity sensor, a gas sensor and an adsorbent sensor, and
when an error in the at least one sensor is detected or a communication error between the at least one sensor and the processor (14) is detected, the processor (14) is configured to transmit a command to stop operating of the adsorption tower (100) to an operating unit (130).

10. The adsorption tower (100) according to any one of claims 1 to 9, wherein, when a flow rate or a flow velocity in the beds is a preset threshold value or more, or a pressure difference between the inlet port (30) and outlet port (40) of the adsorption tower (100) is a preset threshold value or more, the processer is configured to:
determine the fluid supply order or the fluid supply route so as to control the pressure between the inlet port (30) and the outlet port (40) using an artificial intelligence model; and transmit a command to change a connection structure of the plurality of beds based on the determined fluid supply order or fluid supply route to the adsorption tower (100).

11. The adsorption tower (100) according to any one of claims 1 to 10, which is configured to repeatedly adsorb and desorb ammonia present in the fluid supply.

12. An operating control method of an adsorption tower (100) for controlling a fluid supply route to a plurality of beds, which is executed by a computing device (12, 120) including a memory (16) configured to store one or more instructions, and a processor (14) configured to execute the one or more instructions stored in the memory (16), the method comprising:
measuring adsorption values in a plurality of beds;
determining, a fluid supply order to the plurality of beds according to the measured adsorption values in the plurality of beds; and
controlling, the fluid supply route by opening and closing valves (50, 50a-c) according to the determined fluid supply order.

13. The operating control method according to claim 12, wherein the processor (14) is a dedicated artificial intelligence processor (14) with a hardware structure specialized for processing a specific artificial intelligence model, preferably wherein the artificial intelligence model is a neural network, more preferably wherein the neural network consists of a plurality of neural network layers, and each of the plurality of neural network layers has a plurality of weight values, performs neural network calculation through calculations between the calculation results of the previous layer and the plurality of weight values, and the he plurality of weight values assigned to the plurality of neural network layers may be optimized by the learning results of the artificial intelligence model.

14. A method to repeatedly adsorb and desorb a fluid by operating an adsorption tower (100), the method comprising the following steps:
measuring adsorption values in a plurality of beds;
determining, a fluid supply order to the plurality of beds according to the measured adsorption values in the plurality of beds; and
controlling, the fluid supply route by opening and closing valves (50, 50a-c) according to the determined fluid supply order.

15. The method of claim 14, wherein the fluid adsorbed by the adsorption tower (100) is air feed containing ammonia and optionally volatile organic compounds (VOCs), and the method further comprises removing discharge air from which the ammonia and optionally the volatile organic compounds (VOCs) have been removed by applying a vapor recovery method while passing a first bed to a last bed of the multiple beds.
